# EUROPEAN PATENT SPECIFICATION

(11) **EP 0 481 538 B1**
(45) Date of publication and mention of the grant of the patent: **10.07.1996**
(21) Application number: 91200851.3
(22) Date of filing: 10.04.1991
(51) Int. Cl.: A01B 23/06, A01B 21/08

(54) **Device for working the ground**
Vorrichtung zur Bodenbearbeitung
Dispositif de labourage

(30) Priority: 19.10.1990 EP 90202805
(43) Date of publication of application: 22.04.1992
(73) Proprietor: EVERS RESEARCH B.V., NL-7687 BE Daarlerveen (NL)
(72) Inventor: Evers, Johann, NL-7687 AZ Daarlerveen (NL)
(74) Representative: Hoijtink, Reinoud

(56) References cited:
- EP-A- 0 280 048
- EP-A- 0 428 198
- US-A- 2 659 291
- US-A- 2 768 864
- US-A- 3 675 725

## Description

The present invention relates to a device for working the ground comprising a frame with a plurality of standing shafts mounted pivotally thereon, moveable setting means connected with said shaft for collectively pivoting said shafts, each said standing shaft being provided on a free end with a lying shaft whereon a disc-shaped body is rotatably mounted in a bearing, wherein each disc-shaped body has a concave and a convex side, adjacent disc-shaped bodies are arranged in parallel relationship, each pivotable standing shaft is placed on the concave side of its associated disc-shaped body, and the length of the lying shaft is such that the distance between the axis of the pivotable standing shaft and said bearing is at least equal to or longer than the axial dimension of said bearing. Such a device is disclosed in EP-A-0 428 198, part of which is comprised in the state of the art for the present application under Article 54 (3) EPC.

Such a device (normally known as a disc harrow) is used in agriculture for further working of ploughed earth, for ploughing under seed and manure and/or for weed control. It is of great importance in the said workings to keep the working depth, i.e. the depth to which the discs work the ground, substantially unchanged. A disc harrow is generally fixed for this purpose to a so-called three-point lifting device that forms part of a tractor and with which the position of the harrow relative to the tractor, and therewith the working depth, is controlled.

The device according to the preamble of claim 1 differs from conventional disc harrows wherein the discs are jointly fixed to one continuous shaft in that each disc is arranged on the end of a separate, pivotable standing shaft. This has the great advantage that the angle between the lying shaft of the discs and the direction of movement of the tractor (the setting angle) can be varied without a continuous shaft having to be swivelled for this purpose through the desired setting angle. Thus prevented is that the discs on one of the outer ends of the harrow are moved far behind the tractor and that their working depth can no longer be properly controlled by the lifting device. In the device according to the preamble of claim 1 the setting angle of the discs can be varied without the distance between the discs and the tractor changing, whereby, using the lifting device, a virtually constant working depth can be simply maintained.

Furthermore, with the disc harrow of the preamble of claim 1 there is no danger of earth thrown up by one of the parallelly arranged discs collecting and clogging between an adjacent standing pivot shaft and its associated disc, whereby the discs could jam, since each standing pivot shaft is placed on the concave side of its associated disc-shaped body. The disc harrow of the earlier application is reliable and robust, and suitable for use in a large number of ground types.

The present invention has for its object to provide a disc harrow of the type described above which is further improved. According to the invention, this is achieved in that during working each lying shaft runs in inclined position relative to the ground. Each disc thereby as it were "digs" the ground whereby this is well loosened.

Preferably, each lying shaft encloses an angle of slope with the ground of between 1 and 50°, more preferably between 20 and 30°.

When the frame comprises a fixed part and at least one part bearing the pivot shafts and mounted in the fixed part for pivoting about a horizontal axis running substantially transversely of the working direction, the angle of slope enclosed by the ground and the lying shafts can be varied in simple manner.

In a further preferred embodiment, the frame may include a plurality of pivotable parts mutually joined by adjustable connecting means, thus allowing subsequent rows of discs to have varying degrees of "digging" action.

Mentioned and other features of the device according to the invention will be elucidated on the basis of an embodiment, wherein reference is made to the annexed drawing in which corresponding reference numerals designate corresponding components, and wherein:
fig. 1 shows a perspective view of a the device according to the state of the art;
fig. 2 is a partially sectional view of a detail of the setting means of the device;
fig. 3 shows a perspective view of the device according to the invention;
fig. 4 shows a detail of a pivot shaft with disc-shaped body along the arrow IV in fig. 3;
fig. 5 is a top view along the arrow V in fig. 4;
fig. 6 shows a rear view of a disc-shaped body according to a second embodiment of the invention;
fig. 7 shows a detail along the arrow VII in fig. 3; and
fig. 8 is a side view of a device according to the invention having attached thereto a cultivator and a second device according to the invention.

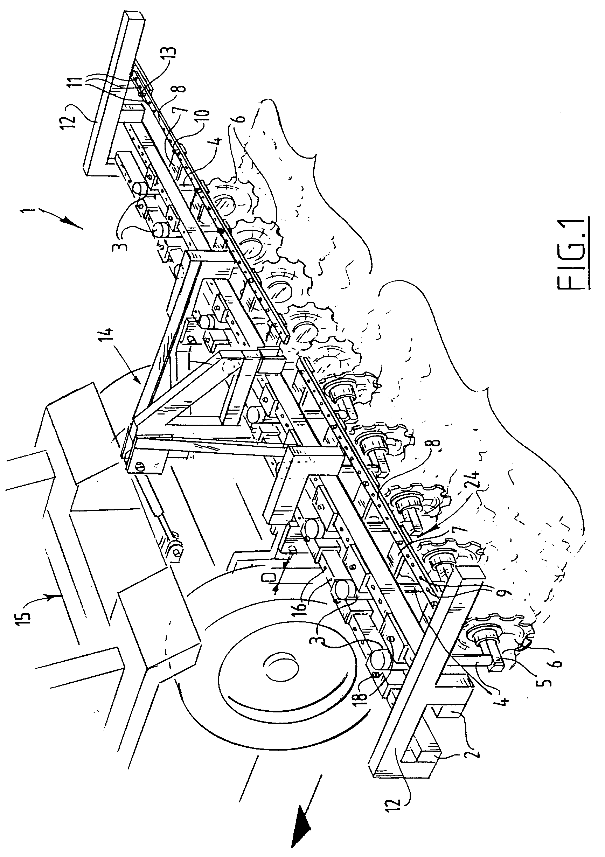

A ground working device 1 (fig. 1) normally designated as disc harrow comprises a frame 2 in divided form whereon at regular mutual intervals between both parts bearing means 3 are suspended by means of gripping members 23. Pivotally mounted in the bearing means 3 are the first outer ends of standing shafts 4. The free ends of the standing pivot shafts 4 are provided with lying shafts 5 on which disc-shaped bodies 6 are rotatably mounted. The pivot shafts 4 are arranged on the concave side of each disc-shaped body 6 so that earth thrown up by an adjacent disc-shaped body 6 cannot collect and clog between the pivot shaft 4 and the disc-shaped body 6. Jamming of the disc-shaped body 6 is thus prevented.

For adapting of the setting angle of the disc-shaped bodies 6 the disc harrow 1 is provided with setting means 24.

Because the disc-shaped bodies 6 are each pivotable relative to the frame 2 the latter does not have to swivel relative to the direction of movement of the tractor 15. The distance D between the rear wheels of tractor 15 and the device 1 can thereby be minimal and owing to the short-moment arm the working depth of the disc-shaped bodies 6 can be well controlled by the lifting device of an agricultural tractor 15.

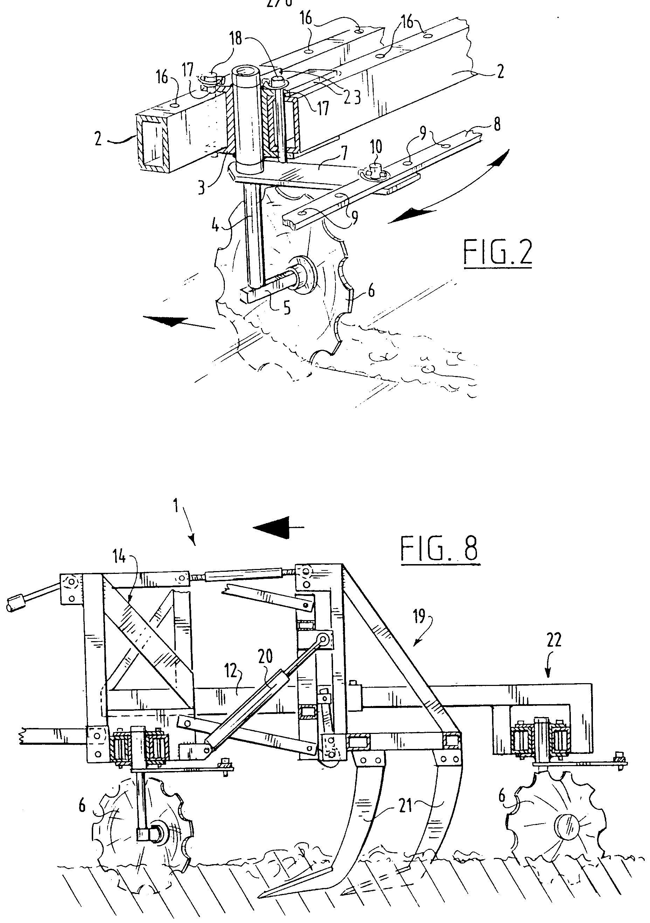

Fixed to each pivot shaft 4 is a first extremity of a radially extending adjusting body 7 (fig. 2). The other extremity of the body 7 is provided with a hole which co-acts with an opening 9 arranged in an adjusting member 8 and with detachable pin-like fixation means 10 to attach the adjusting body 7 pivotally to the adjusting member 8. The outer end of the adjusting member 8 is likewise provided with a number of openings 11 which co-act with an opening arranged in a connecting member 12 joining both frame parts 2, 2 and second detachable pin-like fixation means 13 to fix the adjusting member 8 in a determined position relative to the frame 2.

The disc harrow 1 further comprises a frame 14 with which the harrow 1 is attached to a three-point lifting device arranged on the rear of tractor 15. In order to prevent the occurrence of transverse forces and moments around the top axis of the tractor 15 the harrow 1 in the embodiment shown here is of symmetrical construction relative to the centre line of the tractor 15.

To change the setting angle of the disc-shaped bodies 6 the disc harrow 1 is raised by the lifting device so far that the disc-shaped bodies 6 are free of the ground, whereafter the pin-like fixation means 13 connecting an opening 11 and an opening in the connecting member 12 is released, the adjusting member 8 is moved such that the disc-shaped bodies 6 are pivoted by the adjusting bodies 7 in the desired direction and the disc-shaped bodies 6 are fixed in their new position by placing the releasable pin-like fixation means 13 through one of the other openings 11 and the opening in the connecting member 12.

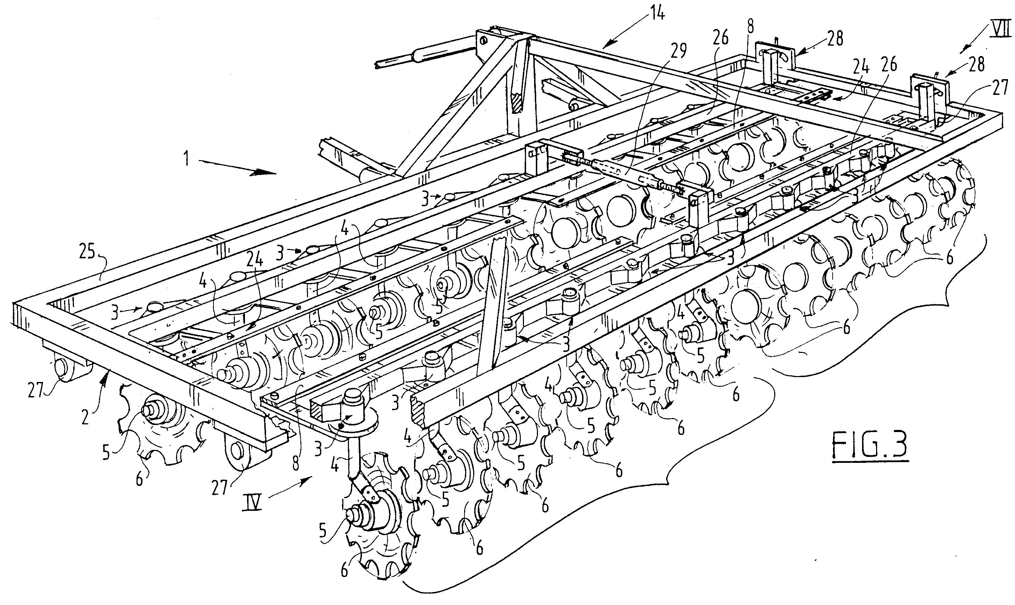

In a disc harrow 1 according to the invention the frame 2 comprises a fixed part 25 in addition to two pivotable parts 26 which bear the pivot shafts 24 and are pivotable about a horizontal axis running substantially transversely of the working direction indicated by the arrow (fig. 3). The pivotal parts 26 are mounted in bearings 27 attached to the fixed part 25. The angle of pivot of the pivotable parts 26 relative to the fixed part 25 of frame 2 can be set using setting means 28. The pivotable parts 26 are mutually connected by adjustable connecting means 29.

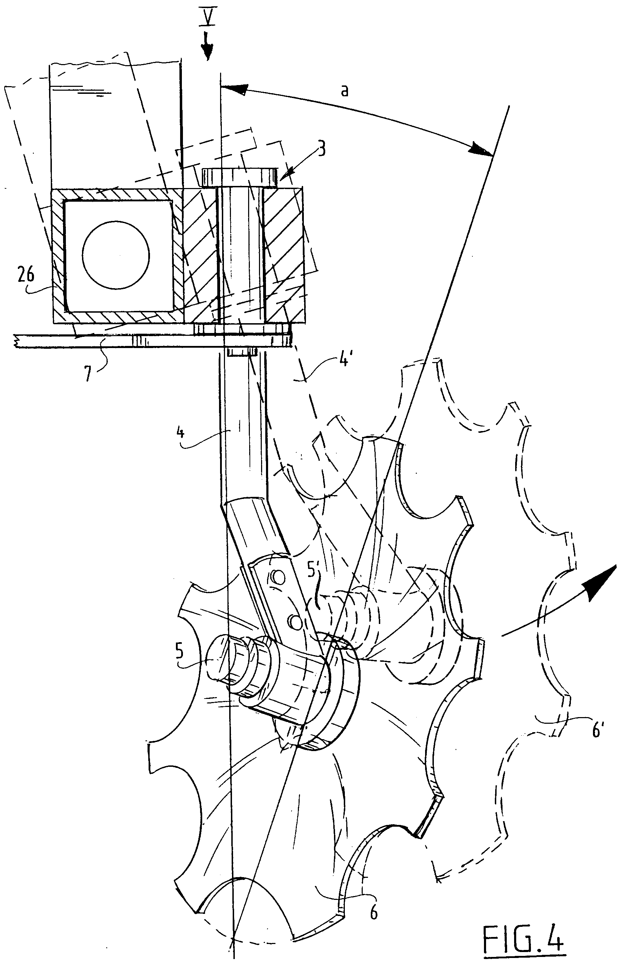

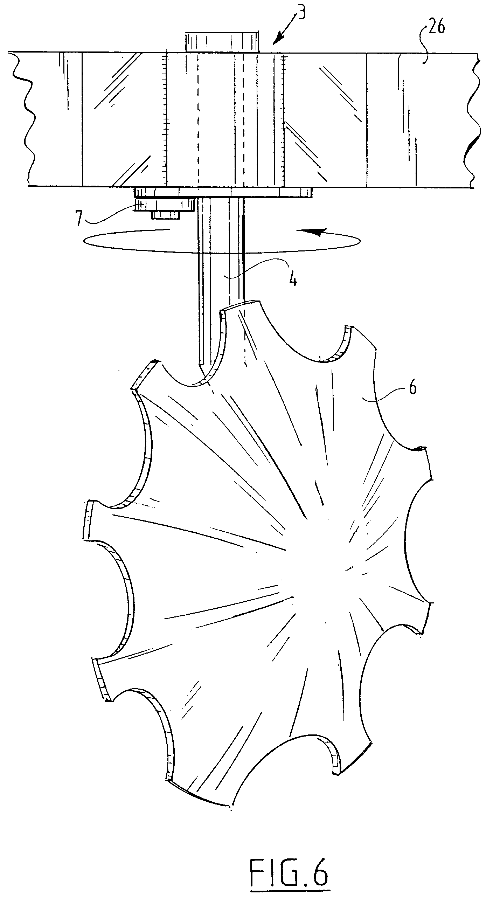

Each lying shaft 5 (fig. 4) of the disc harrow 1 according to the invention lies at an inclination relative to the ground during working. The disc-shaped body thereby "digs" in the ground whereby this is properly churned loose. The optimal value of the angle of inclination "a" enclosed by the lying shaft 5 and the ground depends on differing conditions, such as type of ground, the crop cultivated and/or to be cultivated thereon and the presence and/or type of any weeds etc. Angle values of between 1 and 50° are however suitable, wherein values of between 20 and 30° are preferred. In the embodiment shown the angle "a" amounts to roughly 26°. The angle "a" can be varied by pivoting the pivotable part 26 of frame 2 relative to the fixed part 25 as indicated with dashed lines. The shafts 5 then describe a conical surface.

The shape of the standing pivot shaft 4 is adapted to the curvature of the disc-shaped body 6 such that the distance between the pivot shaft 4 and the disc-shaped body 6 increases in the direction from the centre point of the body to its rim. Embodying the pivot shaft 4 and the disc-shaped body 6 diverging in this manner prevents any earth adhering to the concave side of the body 6 from collecting at the location of the pivot shaft 4, whereby the disc-shaped body 6 would still become jammed.

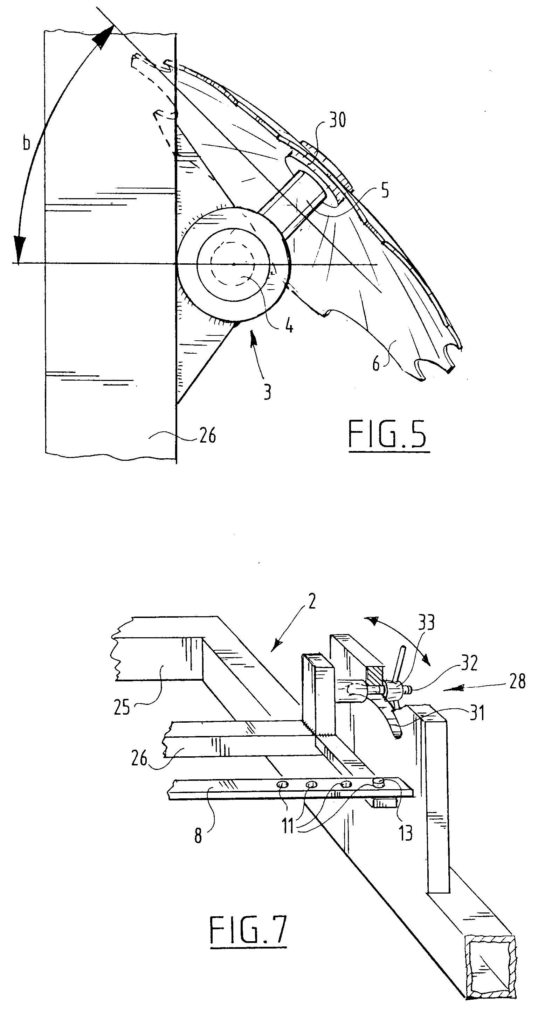

The setting angle "b" (fig. 5) is selected like the angle of inclination "a" in accordance with the type of ground, the sort of cultivated crop and/or type of weed. The figure once again clearly shows the sloping disposition of the disc-shaped body 6. The latter is arranged in the embodiment shown about a bearing 30 which therefore extends on the convex side of the disc-shaped body.

It is however also possible for the bearing 30 to be placed against the disc-shaped body 6 on the concave side, so that the convex side of the body remains substantially smooth (fig. 6). There is then no danger whatever that the action of the bearing 30 can be affected by the thrown-up earth.

The angle of pivot between the pivotable part 26 and the fixed part 25 of the frame 2 is set using adjusting means 28 which are formed by a slot 31 arranged in the fixed part 25 and a bolt 32 movable therein, which bolt is fixedly connected to the pivotable part 26 and provided with a clamping nut 33 (fig. 7). The pin-hole connection 13, 11 shown in this figure for adjusting the desired setting angle "b" of the disc-shaped bodies 6 can of course be replaced simply by another setting mechanism, such as a spindle for instance.

Situations are conceivable where it is desired to select different pivot angles for the two pivotable parts 26 of frame 2, in order to obtain a varying degree of "digging" action in the two rows of disc-shaped bodies 6 (fig. 3). This may be required because the first row of disc-shaped bodies 6 encounters generally as yet unworked ground while the second row of disc-shaped bodies 6 comes into contact with ground already worked by the first row. In order to enable such variations in the pivot angle the connecting means 29 between the first and second pivotable part 26 are adjustable.

It may be desired to vary the distance in transverse direction between the various disc-shaped bodies 6. To this end the bearing means 3 in which each standing pivot shaft 4 is mounted can be releasably arranged on the frame (fig. 1). The bearing means 3 can then be displaced in transverse direction and fixed in particular desired positions by means of pin-hole connections 16-18.

By attaching a cultivator 19 to the frame 14 of the first disc harrow 1 in the manner shown in fig. 8 the working depth of the disc-shaped bodies 6 can be precisely controlled. The position of the cultivator 19 relative to the disc harrow 1 is controlled using (for instance hydraulic) adjusting means 20. When the harrow 1 is lowered by the lifting device fixed to tractor 15 the teeth 21 of the cultivator will dig themselves in and, depending on the position of the adjusting means 20, pull the disc-shaped bodies 6 of the device 1 to a greater or lesser degree into the ground. Thus obtained is a virtually constant working depth.

The embodiment of the device 1 shown here comprises a second device 22 according to the invention fixed to the elongation of connecting members 12, 12. The addition of a second disc harrow 22 is of importance if the first harrow 1 is provided with disc-shaped bodies 6 which are all positioned in the same direction and which is thus asymmetrical. Use of a single disc harrow 1 results namely in such a case in the occurrence of transverse forces and moments making the tractor 15 difficult to control.

## Claims

1. Device (1) for working the ground comprising a frame (2) with a plurality of standing shafts (4) mounted pivotally thereon, moveable setting means (7) connected with said shaft (4) for collectively pivoting said shafts (4), each said standing shaft (4) being provided on a free end with a lying shaft (5) whereon a disc-shaped body (6) is rotatably mounted in a bearing (30), wherein each disc-shaped body (6) has a concave and a convex side, adjacent disc-shaped bodies (6) are arranged in parallel relationship, each pivotable standing shaft (4) is placed on the concave side of its associated disc-shaped body (6), and the length of the lying shaft (5) is such that the distance between the axis of the pivotable standing shaft (4) and said bearing (30) is at least equal to or longer than the axial dimension of said bearing (30), **characterized in that** during working each lying shaft (5) runs in an inclined position relative to the ground.

2. Ground working device as claimed in claim 1, **characterized in that** each lying shaft (5) encloses an angle of slope (a) with the ground of between 1 and 50°.

3. Ground working device as claimed in claim 2, **characterized in that** each lying shaft (5) encloses an angle of slope (a) with the ground of between 20 and 30°.

4. Ground working device as claimed in any of the foregoing claims, **characterized in that** the frame (2) comprises a fixed part (25) and at least one part (26) bearing the pivot shafts (4) and mounted in the fixed part (25) for pivoting about a horizontal axis running substantially transversely of the working direction.

5. Ground working device as claimed in claim 4, **characterized in that** the frame (2) comprises a plurality of pivotable parts (26) mutually joined by adjustable connecting means (29).

## Patentansprüche

1. Vorrichtung (1) zur Bodenbearbeitung mit einem Rahmen (2) mit mehreren aufrechten Schaften (4), die daran drehbar angebracht sind, einem beweglichen Einstellmittel (7), das mit dem Schaft (4) verbunden ist, um die Schafte (4) zusammen zu drehen, wobei jeder besagte aufrechte Schaft (4) an einem freien Ende mit einem liegenden Schaft (5) versehen ist, worauf ein scheibenförmiger Körper (6) in einem Lager (30) drehbar angebracht ist, worin jeder scheibenförmige Körper (6) eine konkave und eine konvexe Seite aufweist, benachbarte scheibenförmige Körper (6) in paralleler Beziehung angeordnet sind, jeder drehbare aufrechte Schaft (4) auf der konkaven Seite seines zugeordneten scheibenförmigen Körpers (6) angeordnet ist und die Länge des liegenden Schaftes (5) derart ist, daß der Abstand zwischen der Achse des drehbaren aufrechten Schaftes (4) und dem Lager (30) mindestens gleich oder länger als die axiale Abmessung des Lagers (30) ist, **dadurch gekennzeichnet, daß** während einer Bearbeitung jeder liegende Schaft (5) in einer geneigten Stellung bezüglich des Bodens verläuft.

2. Bodenbearbeitungsvorrichtung nach Anspruch 1, **dadurch gekennzeichnet, daß** jeder liegende Schaft (5) einen Neigungswinkel (a) mit dem Boden zwischen 1 und 50° einschließt.

3. Bodenbearbeitungsvorrichtung nach Anspruch 2, **dadurch gekennzeichnet, daß** jeder liegende Schaft (5) einen Neigungswinkel (a) mit dem Boden zwischen 20 und 30° einschließt.

4. Bodenbearbeitungsvorrichtung nach irgendeinem der vorhergehenden Ansprüche, **dadurch gekennzeichnet, daß** der Rahmen (2) einen festen Teil (25) und mindesten einen Teil (26) aufweist, der die Drehschafte (4) trägt und in dem festen Teil (25) angebracht ist, um um eine horizontale Achse zu drehen, welche im wesentlichen transversal zu der Arbeitsrichtung verläuft.

5. Bodenbearbeitungsvorrichtung nach Anspruch 4, **dadurch gekennzeichnet, daß** der Rahmen (2) mehrere drehbare Teile (26) aufweist, die durch ein einstellbares Verbindungsmittel (29) wechselseitig verbunden sind.

## Revendications

1. Instrument (1) pour le travail de la terre, comprenant un châssis (2) qui présente une pluralité d'arbres verticaux (4) montés pivotants sur ce châssis, des moyens de réglage mobiles (7) reliés auxdits arbres (4) pour faire pivoter collectivement lesdits arbres (4), chacun desdits arbres verticaux (4) étant muni, sur son extrémité libre, d'un arbre couché (5) sur lequel un corps en forme de disque (6) est monté rotatif dans un palier (30), dans lequel instrument chaque corps en forme de disque (6) possède un côté concave et un côté convexe, les corps en forme de disque (6) mutuellement adjacents sont disposés en parallèle, chaque arbre vertical pivotant (4) est placé sur le côté concave du corps en forme de disque (6) qui lui est associé et la longueur de l'arbre couché (5) est telle que la distance entre l'axe de l'arbre vertical pivotant (4) et ledit palier (30) soit au moins égale ou supérieure à la dimension axiale dudit palier (30), caractérisé en ce que, pendant le travail, chaque arbre couché (5) s'étend dans une position inclinée par rapport au sol.

2. Instrument de travail de la terre selon la revendication 1, caractérisé en ce que chaque arbre couché (5) forme avec le sol un angle d'inclinaison (a) compris entre 1 et 50°.

3. Instrument de travail de la terre selon la revendication 2, caractérisé en ce que chaque arbre couché (5) forme avec la terre un angle d'inclinaison (a) compris entre 20 et 30°.

4. Instrument de travail de la terre selon une quelconque des revendications précédentes, caractérisé en ce que le châssis (2) comprend une partie fixe (25) et au moins une partie (26) qui porte les arbres pivots (4) et qui est montée dans la partie fixe (25) pour pivoter autour d'un axe horizontal s'étendant sensiblement transversalement à la direction de travail.

5. Instrument de travail de la terre selon la revendication 4, caractérisé en ce que le châssis (2) comprend une pluralité de parties pivotantes (26) qui sont reliées entre elles par des moyens de liaison réglables (29).
